# EUROPÄISCHE PATENTSCHRIFT

(11) **EP 2 984 194 B1**
(45) Veröffentlichungstag und Bekanntmachung des Hinweises auf die Patenterteilung: **26.10.2022**
(21) Anmeldenummer: 14757851.2
(22) Anmeldetag: 10.04.2014
(51) Int. Cl.: B22F 3/10, B22F 7/08, C22C 1/04, H01G 9/052

(54) **VERFAHREN ZUR HERSTELLUNG VON SAUERSTOFFARMEN VENTILMETALLSINTERKÖRPERN MIT HOHER OBERFLÄCHE**
METHOD FOR PRODUCING LOW-OXYGEN VALVE-METAL SINTERED BODIES HAVING A LARGE SURFACE AREA
PROCÉDÉ DE PRÉPARATION DE CORPS FRITTÉS EN MÉTAUX À EFFET DE VALVE, PAUVRES EN OXYGÈNE, DE SURFACE IMPORTANTE

(30) Priorität: 12.04.2013 DE 102013206603
(43) Veröffentlichungstag der Anmeldung: 17.02.2016
(73) Patentinhaber: TANIOBIS GmbH, 38642 Goslar (DE)
(72) Erfinder: HAAS, Helmut, 38312 Achim (DE); HAGYMASI, Marcel, 38690 Vienenburg (DE); RAWOHL, Christine, 38685 Langelsheim (DE)
(86) Internationale Anmeldenummer: PCT/EP2014/057244
(87) Internationale Veröffentlichungsnummer: WO 2014/167045

(56) Entgegenhaltungen:
- EP-A1- 1 071 830
- WO-A2-2007/130483
- JP-A- 2003 089 801
- US-A1- 2004 216 558
- US-A1- 2005 150 328

## Beschreibung

Die vorliegende Erfindung betrifft ein Verfahren zur Herstellung von Sinterkörpern aus Ventilmetallen, die trotz ihrer großen Oberfläche einen niedrigen Sauerstoffgehalt und eine gute Anodisierbarkeit aufweisen. Weiterhin betrifft die Erfindung Sinterkörper, die nach dem Verfahren erhältlich sind sowie deren Verwendung für elektronische Bauteile, insbesondere Kondensatoren. Außerdem betrifft die vorliegende Erfindung ein Ventilmetallpulver, das besonders für den Einsatz in dem beschriebenen Verfahren geeignet ist.

Als Festelektrolytkondensatoren mit sehr großer aktiver Kondensatorfläche und kleiner für die mobile Kommunikationselektronik geeigneter Bauweise werden überwiegend Kondensatormodelle mit einer Tantalpentoxidsperrschicht eingesetzt, die auf einen entsprechenden leitfähigen Tantalmetallträger aufgebracht sind. Dabei wird die Stabilität des Metalls ("Ventilmetall"), die vergleichsweise hohen Dielektrizitätskonstanten und die über eine elektrochemische Erzeugung mit sehr gleichmäßiger Schichtdicke herstellbare isolierende Pentoxidschicht ausgenutzt. Der metallische Träger, der zugleich die Anode des Kondensators darstellt, besteht aus einer hochporösen, schwammartigen Struktur, die durch Pressen und Versintern feinst-teiliger Primärstrukturen oder bereits schwammartiger Sekundärstrukturen hergestellt wird. Dabei ist die mechanische Stabilität des Presskörpers wesentlich für dessen weitere Verarbeitung zum Sinterkörper, der eigentlichen Trägerstruktur bzw. Anode des Kondensators. Die Oberfläche der Trägerstruktur wird elektrolytisch zu amorphem Pentoxid oxidiert (anodisch oxidiert; "formiert"), wobei die Dicke der Pentoxidschicht durch die Maximalspannung der elektrolytischen Oxidation ("Formierspannung") bestimmt wird. Die Gegenelektrode wird durch Tränken der schwammartigen Struktur mit Mangannitrat, das thermisch zu Mangandioxid umgesetzt wird, oder mit einem flüssigen Vorläufer eines Polymerelektrolyten und Polymerisation erzeugt.

Die Kontaktierung zu den Elektroden erfolgt auf der kathodischen Seite über einen Schichtaufbau aus Graphit und Leitsilber an den Ableiter in Form eines Bandes oder Drahtes, auf der anodischen Seite über einen Draht aus Tantal oder Niob, wobei dieser Draht üblicherweise vor dem Sintern in die Pressform eingelegt wird, und dieser aus dem Kondensator herausgeführt wird. Die Festigkeit, mit der der Draht mit der Anodenstruktur versintert ist (Ausreißfestigkeit bzw. Drahtzugfestigkeit), ist eine wesentliche Eigenschaft für die weitere Verarbeitung zum Kondensator.

Ein generelles Problem bei der Herstellung von solchen Sinterkörpern ist die Kontrolle des Sauerstoffgehalts, der besonders beim Einsatz von Tantal die Eigenschaften des daraus hergestellten Kondensators massiv beeinflusst. Zahlreiche Untersuchungen belegen den negativen Einfluss von Sauerstoff auf die Eigenschaften des fertigen Tantalkondensators. Ein erhöhter Sauerstoffgehalt kann zu einer unerwünschten Kristallisation des amorphen Tantaloxids führen, welches während der Formierung des Tantalsinterkörpers aufgebaut wird. Während amorphes Tantaloxid ein hervorragender Isolator ist, weist kristallines Tantaloxid immerhin eine geringe elektrische Leitfähigkeit auf, was zu Ausfällen des Kondensators auf Grund von erhöhtem Reststrom oder Durchbrüchen führt. Da Tantal eine natürliche Passivschicht aus Tantaloxid besitzt, die eine weitere Oxidation des Metalls verhindert, kann der Sauerstoff nicht vollständig eliminiert werden, sein Gehalt lässt sich bestenfalls minimieren. Ein Sauerstoffgehalt von etwa 3000 ppm^{∗}g/m² ist zur Passivierung erforderlich, da das Tantalpulver andernfalls pyrophor wäre und bei Kontakt mit der Umgebungsluft abbrennen würde. Die natürliche Oxidschicht des Tantals weist eine Dicke von ungefähr 1 bis 2 nm auf, was einem Sauerstoffgehalt von etwa 3000 ppm^{∗}g/m² entspricht und was wiederum beispielsweise etwa einen Gehalt von 0,6% bei einem Pulver mit einer spezifischen Oberfläche von 2 m²/g ausmachen würde. Selbst in der Literatur als "sauerstoffrei" bezeichnetes Tantalpulver weist daher immer mindestens diesen Sauerstoffgehalt auf (siehe hierzu z.B. Y. Freeman et al, J. Electrochem. Soc. 2010, Vol. 157, Nr. 7, G161; J. D. Sloppy, Pennsylvania State University, Dissertation 2009, S. 180; Q. Lu, S. Mato, P. Skeldon, G. E. Thompson, D. Masheder, Thin Solids Films 2003, 429 (1-2), 238; G. Battistig, G. Amsel, E. D'artemare, Nuclear Instruments & Methods in Physics Research B, 1991, 61, 369-376; L. Young, Trans. Faraday Soc. 1954, 50, 153-159; V. Macagno, J. W. Schultze, J. Electroanal. Chem. 1984, 180, 157-170; O. Kerrec in Transfert Electronique pour les systems de type M.O.E. modification des electrodes par constitution de structures de type M.O.M, Chimie 1992, Paris). Das Problem verstärkt sich für Sinterkörper mit großen Oberflächen, da der Sauerstoffgehalt direkt proportional zur Oberfläche des Tantalsubstrates ist.

WO 02/45109 A1 beschreibt ein Verfahren zur Herstellung von Tantal- oder Niobkondensatoren, das neben dem Sintern und der Deoxidation eine Dotierung des Sinterköpers mit Stickstoff umfasst. Die Herstellung dieser Sinterkörper erfolgt in einer sauerstofffreien Atmosphäre.

US 4,722,756 offenbart ein Verfahren zur Verringerung des Sauerstoffgehalts in Tantal- oder Niobsinterkörpern. Dabei erfolgt das Sintern der Presslinge in einer Wasserstoffatmosphäre in Gegenwart eines reduzierenden Materials. Das reduzierende Material kann aus Beryllium, Calcium, Cer, Hafnium, Lanthan, Lithium, Praseodym, Scandium, Thorium, Titan, Uran, Vanadium, Yttrium oder Zirkonium sowie aus Legierungen oder Mischungen derselben bestehen.

DE 33 09 891 C2 beschreibt ein zweistufiges Verfahren zur Herstellung von Ventilmetall-Sinteranoden für Elektrolytkondensatoren, bei dem die bereits gesinterten Tantalsinterkörper in Gegenwart eines reduzierenden Metalls wie Magnesium deoxidiert werden. Dabei wird das Metall zusammen mit den Sinterköpern in eine Reaktionskammer eingebracht und gleichzeitig mit diesen auf Temperaturen zwischen 650 °C und 1150 °C erhitzt.

WO 2009/140274 A2 beschreibt eine Anode, deren innerer Teil eine höhere Dichte als der äußere Teil aufweist. Auf diese Weise soll die Drahtanbindung verbessert werden. Zur Deoxidation des Presslings wird diesem Magnesium zugeführt, wobei die Prozesstemperaturen hoch genug sind, um das Magnesium zu verdampfen.

DE 31 30 392 A1 beschreibt ein Verfahren zur Herstellung reiner agglomerierter Ventilmetallpulver, bei dem die thermische Agglomerierung bei relativ geringen Temperaturen in Gegenwart eines Reduktionsmittels wie Aluminium, Beryllium, Calcium oder Magnesium durchgeführt wird. Dazu wird das Ventilmetallpulver intensiv mit z.B. Magnesiumpulver vermischt und das Gemisch zu Formkörpern mit einer zylindrischen Form verpresst, die dann bei Temperaturen zwischen 1200 °C und 1400 °C gesintert werden.

US 2004/216558 A1 beschreibt ein Verfahren zur Herstellung eines Sinterkörpers bei dem ein Pressling aus Ventilmetallpulver in Anwesenheit von einem Reduktionsmittel gesintert wird, ohne dass es im direkten Kontakt mit dem festem Reduktionsmittel gelangt.

Obwohl der Sauerstoffgehalt von Sinterkörpern aus Tantal durch eine thermische Nachbehandlung unter reduzierenden Bedingungen oder durch Sinterung der Grünkörper unter reduzierenden Bedingungen gesenkt werden kann, kommt es bei diesen Methoden zu einem Verlust oder zumindest zu einer deutlichen Verschlechterung der Anbindung des Sinterkörpers an den eingebetteten Draht. Die dadurch verschlechterten elektrischen Eigenschaften des Anodenkörpers führen dann zu Totalausfällen oder zumindest starken Ausbeuteverlusten des Kondensators.

Die Aufgabe der vorliegenden Erfindung ist daher die Bereitstellung eines Verfahrens zur Herstellung von Ventilmetallsinterkörpern, die einen geringen Sauerstoffgehalt und gleichzeitig eine gute Drahtanbindung aufweisen. Somit ist die Herstellung von Kondensatoren möglich, die einen geringen Reststrom bei gleichzeitig hoher Kapazität aufweisen. Weiterhin liegt die Aufgabe der vorliegenden Erfindung in der Bereitstellung eines Verfahrens zur Herstellung von Ventilmetallsinterkörpern, das sich gegenüber den herkömmlichen Verfahren zur Herstellung von sauerstoffarmen Ventilmetallsinterkörpern durch eine kürzere Verfahrensdauer auszeichnet.

Eine weitere Aufgabe der Erfindung ist die Bereitstellung eines Ventilmetallpulvers, welches besonders geeignet für den Einsatz im erfindungsgemäßen Verfahren ist und zu verbesserten Sintereigenschaften sowie einer gesteigerten Anbindung des Drahtes an den Sinterkörper führt.

Die Aufgabe wird erfindungsgemäß durch das Bereitstellen eines Verfahrens zur Herstellung eines Sinterköpers gelöst, das folgende Schritte umfasst:
a) Pressen eines Ventilmetallpulvers ausgewählt aus Tantal und/oder Niob umfassend
   i) Sauerstoff in einer Menge von 4100 ppm·g/m²,
   ii) Stickstoff in einer Menge unterhalb von 300 ppm, vorzugsweise zwischen 0,1 ppm und 300 ppm,
   iii) Bor in einer Menge unterhalb von 10 ppm, vorzugsweise zwischen 0,01 ppm und 10 ppm,
   iv) Schwefel in einer Menge unterhalb von 20 ppm, vorzugsweise zwischen 0,1 ppm und 10 ppm,
   v) Silizium in einer Menge unterhalb von 20 ppm, vorzugsweise zwischen 0,01 ppm und 20 ppm,
   vi) Arsen in einer Menge unterhalb von 10 ppm, vorzugsweise zwischen 0,01 ppm und 10 ppm und
   vii) Phosphor in einer Menge unterhalb von 20 ppm, vorzugsweise zwischen 0,01 ppm und 20 ppm, wobei sich die ppm-Werte jeweils auf Massenteile beziehen,
   wobei das Pressen des Pulvers um einen Draht erfolgt,
b) Bereitstellen des in Schritt a) erhaltenen Presslings mit einem Reduktionsmittel derart, dass der Pressling nicht in direkten Kontakt mit festem oder flüssigem Reduktionsmittel steht oder gelangt,
c) Erhitzen derart, dass das Pulver zu einem Sinterkörper versintert und gleichzeitig der Sauerstoffgehalt des Ventilmetalls innerhalb des Sinterkörpers verringert wird; und
d) Entfernen des oxidierten Reduktionsmittels mit Hilfe von Mineralsäuren, wobei der Sinterkörper in Schritt c) einen Sauerstoffgehalt von 2400 bis 3600 ppm·g/m² aufweist.

Bevorzugte Ventilmetallpulver sind hochrein, insbesondere bezüglich der Gehalte an Verunreinigungen, die den Reststrom negativ beeinflussen können. Die Summe der Gehalte an Natrium und Kalium liegt vorzugsweise unterhalb von 5 ppm, besonders bevorzugt unterhalb von 2 ppm. Die Summe der Gehalte an Eisen, Chrom und Nickel liegt vorzugsweise unterhalb von 25 ppm, besonders bevorzugt unterhalb von 15 ppm. Die ppm-Angaben beziehen sich jeweils auf Massenanteile.

Ein Hauptanliegen der mobilen Kommunikationselektronik ist die Befriedigung des Marktes nach hochleistungsfähigen Bauteilen, die allerdings nur eine geringe Größe aufweisen dürfen. Es ist daher eine Ausführungsform des erfindungsgemäßen Verfahrens bevorzugt, bei der das Pulver zu kleinen Formkörpern verpresst wird.

Um einen effizienten Ablauf des Verfahrens zu gewährleisten, sollten die Presslinge bevorzugt mit Hilfe von automatischen Pressen hergestellt werden. Da mit zunehmender Oberfläche des Pulvers der Anteil an Feinstoff im Pulver ebenfalls zunimmt, erhöht sich die Gefahr, dass das Presswerkzeug blockieren oder sogar beschädigt werden könnte. Daher enthält das Pulver in einer bevorzugten Ausführungsform des Verfahrens Presshilfsmittel. Diese Presshilfsmittel wirken als Binder. In einer bevorzugten Ausführungsform, wenn das Ventilmetallpulver Presshilfsmittel enthält, erfolgt zusätzlich zwischen Schritt a) und b) des erfindungsgemäßen Verfahrens ein Entbinderungsschritt. Vorzugsweise ist das Presshilfsmittel ausgewählt aus der Gruppe bestehend aus Polyacrylsäureester, Polyethylenglykol, Kampfer, Polyethylencarbonat und Stearinsäure. Vorzugsweise wird das Presshilfsmittel nach Art und Umfang so gewählt, dass es einerseits gut in das zu verpressende Pulver eindringen kann, sich andererseits aber nach dem Pressen auch wieder mit geringem Aufwand entfernen lässt.

Für den Fall, dass Presshilfsmittel verwendet werden, ist eine Ausführungsform des erfindungsgemäßen Verfahrens bevorzugt, bei dem das Presshilfsmittel nach dem Pressvorgang aus dem Pressling wieder entfernt wird. Diese Entbinderung kann beispielsweise thermisch, etwa durch Verdampfen des Presshilfsmittels oder Thermolyse, oder mittels alkalischer Hydrolyse erfolgen. Die Entbinderungsmethode ist vorzugsweise so gewählt, dass der Gehalt an im Pulver verbleibenden Kohlenstoff so gering wie möglich ist, um eine Beeinträchtigung des späteren Kondensators zu vermeiden.

Vorzugsweise liegt der Kohlenstoffgehalt des Sinterkörpers unterhalb von 200 ppm (parts per million), weiter bevorzugt unterhalb von 100 ppm, insbesondere unterhalb von 50 ppm und im Speziellen unterhalb von 40 ppm und oberhalb von 1 ppm, jeweils bezogen auf Massenteile.

In einer bevorzugten Ausführungsform des erfindungsgemäßen Verfahrens erfolgt das Verpressen des Pulvers bis zu einer Gründichte von 4,5 g/cm³ bis 9 g/cm³, vorzugsweise von 5 g/cm³ bis 8 g/cm³, weiter bevorzugt von 5,5 g/cm³ bis 7,5 g/cm³, insbesondere von 5,5 g/cm³ bis 6,5 g/cm³.

Ein wichtiger Bestandteil eines Kondensators sind die elektrischen Kontakte zu den Elektroden. Die Kontaktierung zu den Elektroden erfolgt auf der kathodischen Seite über einen Schichtaufbau aus Graphit und Leitsilber an den Ableiter in Form eines Bandes oder Drahtes, auf der anodischen Seite über einen Draht aus Tantal oder Niob, wobei dieser Draht üblicherweise vor dem Sintern in die Pressform eingelegt wird, und der aus dem Kondensator herausgeführt wird. Die Festigkeit, mit der der Draht in der Anodenstruktur, also im Sinterkörper versintert ist, d.h. die Anbindung des Drahtes an den Anodenkörper, ist eine wesentliche Eigenschaft für die weitere Verarbeitung des Sinterkörpers zum Kondensator. Daher ist die

Ausführungsform des erfindungsgemäßen Verfahrens, bei der das Verpressen des Pulvers um einen Draht, vorzugsweise um einen Draht aus Ventilmetall, erfolgt.

In einer alternativen Ausführungsform des Verfahrens, das nicht innerhalb der Erfindung liegt, erfolgt die Anbindung des Drahtes durch Anschweißen an den Sinterkörper.

Vorzugsweise ist das Ventilmetall des Drahtes ausgewählt aus der Gruppe bestehend aus Tantal und Niob. Das Ventilmetallpulver, das um den Draht verpresst wird, umfasst Ventilmetalle ausgewählt aus der Gruppe bestehend aus Tantal und Niob. Weiterhin bevorzugt umfassen sowohl der Draht als auch das Pulver Ventilmetalle ausgewählt aus der Gruppe bestehend aus Tantal und Niob.

In einer bevorzugten Ausführungsform des erfindungsgemäßen Verfahrens besteht das Ventilmetallpulver aus agglomerierten Primärteilchen mit einer minimalen Abmessung von 0,05 bis 0,4 µm. Vorzugsweise weisen die Primärteilchen eine spezifische Oberfläche in einem Bereich von 1,5 bis 20 m²/g auf, wobei die spezifische Oberfläche gemäß ASTM D3663 bestimmt wurde. Weiterhin bevorzugt entspricht die Teilchengrößenverteilung des Ventilmetallpulvers einem nach ASTM B822 bestimmten D10-Wert von 2 bis 80 µm, bevorzugt 2 bis 30 µm. Vorzugsweise weist das Ventilmetallpulver einen D50-Wert zwischen 10 und 200 µm, bevorzugt zwischen 15 und 175 µm, auf. Ebenfalls bevorzugt weist das Ventilmetallpulver einen D90-Wert im Bereich zwischen 30 und 400 µm, bevorzugt zwischen 40 und 300 µm, auf. Sowohl der D50-Wert als auch der D90-Wert können beispielsweise gemäß ASTM B822 bestimmt werden.

In einer bevorzugten Ausführungsform des erfindungsgemäßen Verfahrens weist das Ventilmetallpulver eine BET-Oberfläche von 1,5 m²/g bis 20 m²/g, vorzugsweise 2,0 m²/g bis 15 m²/g, insbesondere 3,0 m²/g bis 10 m²/g, speziell 4,0 m²/g bis 8,0 m²/g, auf. BET-Oberfläche im Sinne der vorliegenden Erfindung bezeichnet die nach dem Verfahren nach Brunauer, Emmet und Teller bestimmte spezifische Oberfläche (DIN ISO 9277).

Um eine möglichst große aktive Oberfläche zu erreichen, ist es von Vorteil, ein möglichst offenporiges Pulver zu verwenden. Das Verstopfen von Poren oder das Ausbilden geschlossener Poren, zum Beispiel durch zu starkes Versintern, führt zum Verlust aktiver Kondensatoroberfläche. Dieser Verlust kann durch den Einsatz von Sinterschutzdotierungen mit Stickstoff und/oder Phosphor, früher auch Bor, Silizium, Schwefel oder Arsen, verhindert werden. Allerdings wirkt sich eine zu hohe Konzentration der Sinterschutzdotierung in einer teilweise stark reduzierten Sinteraktivität aus. Daher ist eine Ausführungsform des erfindungsgemäßen Verfahrens bevorzugt, in der das Ventilmetallpulver einen Phosphorgehalt von weniger als 20 ppm, vorzugsweise zwischen 0,1 und weniger als 20 ppm, aufweist, jeweils bezogen auf Massenteile.

In einer bevorzugten Ausführungsform des erfindungsgemäßen Verfahrens weist das Ventilmetallpulver einen möglichst geringen Gehalt an für ihre Sinterschutzwirkung bekannten Substanzen auf. In einer besonders bevorzugten Ausführungsform ist das Ventilmetallpulver frei von einem wirksamen Gehalt an Sinterschutzmitteln.

Das Ventilmetallpulver weist einen Stickstoffgehalt auf, der unterhalb von 300 ppm, insbesondere unterhalb von 300 ppm und oberhalb von 0,1 ppm, liegt, jeweils bezogen auf Massenteile.

Weiterhin weist das Ventilmetallpulver einen Borgehalt auf, der unterhalb von 10 ppm, insbesondere unterhalb von 10 ppm und oberhalb von 0,01 ppm, liegt, jeweils bezogen auf Massenteile.

Ebenfalls weist das Ventilmetallpulver einen Schwefelgehalt auf, der unterhalb von 20 ppm, insbesondere unterhalb von 10 ppm und oberhalb von 0,1 ppm, liegt, jeweils bezogen auf Massenteile.

Weiterhin weist das Ventilmetallpulver einen Siliziumgehalt auf, der unterhalb von 20 ppm, insbesondere unterhalb von 20 ppm und oberhalb von 0,01 ppm, liegt, jeweils bezogen auf Massenteile.

Weiterhin weist das Ventilmetallpulver einen Arsengehalt auf, der unterhalb von 10 ppm, insbesondere unterhalb von 10 ppm und oberhalb von 0,01 ppm, liegt, jeweils bezogen auf Massenteile.

In einer bevorzugten Ausführungsform weist das Ventilmetallpulver einen Phosphorgehalt unterhalb von 20 ppm und oberhalb von 0,1 ppm, einen Stickstoffgehalt unterhalb von 300 ppm und oberhalb von 0,1 ppm, einen Borgehalt unterhalb von 10 ppm und oberhalb von 0,01 ppm, einen Schwefelgehalt unterhalb von 20 ppm und oberhalb von 0,1 ppm, einen Siliziumgehalt unterhalb von 20 ppm und oberhalb von 0,01 ppm und einen Arsengehalt unterhalb von 10 ppm und oberhalb von 0,01 ppm auf, jeweils bezogen auf Massenteile.

Ventilmetalle zeichnen sich dadurch aus, dass ihre Oxide den Strom in eine Richtung sperren, ihn aber in die andere Richtung durchlassen. Zu diesen Ventilmetallen gehören beispielsweise Tantal, Niob oder Aluminium. Ein Ventilmetall im Sinne der vorliegenden Erfindung ist ausgewählt aus Tantal und/ oder Niob.

Ein weiteres Merkmal der Ventilmetalle ist, dass sie eine Passivschicht aus Ventilmetalloxid aufweisen, die eine weitere Oxidation und damit ein Entzünden des Metalls verhindert. Dabei wird der Sauerstoffgehalt bezogen auf die spezifische Oberfläche des Pulvers angegeben, d.h. der Quotient aus Sauerstoffgehalt in ppm bezogen auf Massenteile und der nach BET gemessenen spezifischen Oberfläche.

Bevorzugte Ventilmetalle im Rahmen der vorliegenden Erfindung sind Tantal und Niob.

Das Ventilmetallpulver weist einen Sauerstoffgehalt auf, der zwischen 4100 ppm^{∗}g/m² und 8000 ppm^{∗}g/m², liegt, jeweils bezogen auf Massenteile. Dabei wurde der Sauerstoffgehalt über Carrier Gas Reactive Fusion mit dem Gerät Nitrogen/Oxygen Determinator Model TCH 600 der Firma Leco Instrumente GmbH bestimmt.

Weiterhin bevorzugt ist eine Ausführungsform des erfindungsgemäßen Verfahrens, bei dem das Ventilmetallpulver einen mittleren Partikeldurchmesser D50 von 15 bis 175 µm, vorzugsweise 20 bis 100 µm, aufweist, wobei die mittleren Partikeldurchmesser gemäß ASTM B822 bestimmt wurden.

Es wurde überraschend gefunden, dass durch den Einsatz von Ventilmetallpulver mit einem erhöhten Sauerstoffgehalt sowie einer geringen und definierten Menge von Sinterinhibitoren sowohl die Anbindung des Drahtes an den Sinterkörper als auch die Sinterfähigkeit signifikant erhöht werden konnte.

Für die vorliegende Erfindung ist daher ein Ventilmetallpulver gebraucht, das folgende Komponenten umfasst:
i) Sauerstoff in einer Menge von mehr als 4100 ppm·g/m², vorzugsweise zwischen 4100 ppm·g/m² und 8000 ppm·g/m²,
ii) Stickstoff in einer Menge unterhalb von 300 ppm, vorzugsweise zwischen 0,1 ppm und 300 ppm,
iii) Bor in einer Menge unterhalb von 10 ppm, vorzugsweise zwischen 0,01 ppm und 10 ppm,
iv) Schwefel in einer Menge unterhalb von 20 ppm, vorzugsweise zwischen 0,1 ppm und 10 ppm,
v) Silizium in einer Menge unterhalb von 20 ppm, vorzugsweise zwischen 0,01 ppm und 20 ppm und
vi) Arsen in einer Menge unterhalb von 10 ppm, vorzugsweise zwischen 0,01 ppm und 10 ppm,
vii) Phosphor in einer Menge unterhalb von 20 ppm, vorzugsweise zwischen 0,1 ppm und 20 ppm, wobei sich die ppm-Werte jeweils auf Massenteile beziehen.

Der Sauerstoffgehalt der erfindungsgemäßen Ventilmetallpulver liegt über dem Sauerstoffgehalt von Ventilmetallpulvern des Standes der Technik also oberhalb des üblichen, dass heißt natürlichen Sauerstoffgehalts, der durch den Kontakt des Metalls mit Umgebungsluft zu der Ausbildung einer Oxidschicht auf der Metalloberfläche führt. Der erhöhte Sauerstoffgehalt des erfindungsgemäßen Ventilmetallpulvers lässt sich beispielsweise durch Behandlung des Metallpulvers mit Sauerstoff spezifisch einstellen.

Es wurde überraschend gefunden, dass ein Pulver der beschriebenen Zusammensetzung verbesserte Sinterfähigkeiten und damit eine verbesserte Drahtanbindung an den Sinterkörper aufweist. Durch den gegenüber dem Stand der Technik erhöhten Sauerstoffgehalt im Ventilmetallpulver werden während des Sintervorgangs höhere Temperaturen im Inneren des Presslings erzeugt, wodurch einen bessere Anbindung des Drahtes an den Sinterkörper erreicht wird.

In einer bevorzugten Ausführungsform weist das Ventilmetallpulver eine BET-Oberfläche von 1,5 m²/g bis 20 m²/g, vorzugsweise 2,0 m²/g bis 15 m²/g, insbesondere 3,0 m²/g bis 10 m²/g, speziell 4 m²/g bis 8 m²/g, auf.

Weiter bevorzugt ist ein Ventilmetallpulver, welches aus agglomerierten Primärteilchen mit einer Abmessung von 0,05 bis 0,4 µm besteht. Vorzugsweise weisen die Primärteilchen eine spezifische Oberfläche in einem Bereich von 1,5 bis 20 m²/g auf, wobei die spezifische Oberfläche gemäß DIN ISO 9277 bestimmt wurde. Weiterhin bevorzugt entspricht die Teilchengrößenverteilung des Ventilmetallpulvers einem nach ASTM B822 bestimmten D10-Wert von 2 bis 80 µm, bevorzugt 2 bis 30 µm. Vorzugsweise weist das Ventilmetallpulver einen D50-Wert zwischen 10 und 200 µm, bevorzugt zwischen 15 und 175 µm, auf. Ebenfalls bevorzugt weist das Ventilmetallpulver einen D90-Wert im Bereich zwischen 30 und 400 µm, bevorzugt zwischen 40 und 300 µm, auf. Sowohl der D50-Wert als auch der D90-Wert können beispielsweise gemäß ASTM B822 bestimmt werden.

Das erfindungsgemäße Ventilmetallpulver ist ausgewählt aus Niob und/oder Tantal.

In einer besonders bevorzugten Ausführungsform werden die erfindungsgemäßen Ventilmetallpulver in Schritt a) des erfindungsgemäßen Verfahrens eingesetzt, dass heißt verpresst.

Bevorzugte Ventilmetallpulver sind hoch rein, insbesondere bezüglich der Gehalte an Verunreinigungen, die den Reststrom negativ beeinflussen können. Die Summe der Gehalte an Natrium und Kalium liegt vorzugsweise unterhalb von 5 ppm, besonders bevorzugt unterhalb von 2 ppm. Die Summe der Gehalte an Eisen, Chrom und Nickel liegt vorzugsweise unterhalb von 25 ppm, besonders bevorzugt unterhalb von 15 ppm. Die ppm-Angaben beziehen sich jeweils auf Massenanteile.

Ein erhöhter Sauerstoffgehalt in Kondensatoren führt zu schlechteren elektrischen Eigenschaften. So ist es möglich, dass auf Grund eines erhöhten Sauerstoffgehalts das ursprünglich amorphe Oxid des Ventilmetalls in eine kristalline Form übergeht, welches allerdings eine höhere elektrische Leitfähigkeit aufweist. Auf diese Weise nimmt die isolierende Wirkung des Dielektrikums ab und der Kondensator weist einen so genannten Reststrom in zunehmendem Maße auf. Neben dem natürlichen Sauerstoffgehalt, der durch die Passivierung des Metalls gegeben ist, kommt es während des Sinterns des Presslings unter nicht-reduzierenden Bedingungen zu einem weiteren Einbau von Sauerstoff. Es ist daher wichtig, den Sauerstoffgehalt im Pressling während des Sinterns zu reduzieren. Dies ist von besonderer Bedeutung zumal der Pressling während des Sinterns schrumpft, wodurch sich seine Oberfläche verringert, was wiederum zu einem Überschuss an Sauerstoff im porösen Metallverbund führt. Durch die erhöhten Temperaturen während des Sinterns kann deutlich mehr Sauerstoff in das Metallgitter bis zur Sättigungsgrenze eingebaut werden, als das bei Raumtemperatur der Fall wäre. Dieser Einbau führt zu einer Aufweitung des Metallgitters. Sobald ein kritischer Wert überschritten ist, kommt es zum Ausfall von kristallinem Ventilmetalloxid, was die beschriebenen negativen Auswirkungen, wie beispielsweise erhöhte Restströme, nach sich zieht. Daher ist eine Ausführungsform des erfindungsgemäßen Verfahrens bevorzugt, bei dem das Sintern des Presslings mit einer gleichzeitigen Deoxidation verbunden ist.

Deoxidation im Sinne der vorliegenden Erfindung ist die Entfernung von überschüssigem Sauerstoff aus bereits reduzierten Metallen, z.B. aus dem Metallgitter.

In einer bevorzugten Ausführungsform des erfindungsgemäßen Verfahrens erfolgt das Sintern des Presslings in einer reduzierenden Atmosphäre. Nach dem Stand der Technik bekannte Verfahren sind das Vermischen des Pulvers mit einem Reduktionsmittel oder das gleichzeitige Erhitzen des Reduktionsmittels zusammen mit den Sinterkörpern. Diese Methoden haben allerdings den Nachteil, dass die so durchgeführte Deoxidation zu einer verschlechterten Drahtanbindung führt, was soweit gehen kann, dass dieser während der weiteren Prozessabläufe aus dem Sinterkörper herausgelöst wird und die Erzeugung einer anodischen Oxidschicht auf dem Sinterkörper oder danach eine Messung der elektrischen Eigenschaften der so erhaltenen Anode nicht mehr möglich ist. Daher ist ein Verfahren bevorzugt, bei dem der Sauerstoffgehalt gesenkt wird, während gleichzeitig eine ausreichend feste Verbindung des Drahtes mit dem Sinterkörper gegeben ist.

In einer bevorzugten Ausführungsform des erfindungsgemäßen Verfahrens liegt das Reduktionsmittel in fester oder flüssiger Form räumlich getrennt von den Ventilmetallen vor. Es wird eine Ausführungsform bevorzugt, bei der das Reduktionsmittel verdampft wird. Sobald die gewünschte Temperatur erreicht ist, wird der Pressling, der sich vorzugsweise in einem Korb aus löchrigem Niob- oder Tantalblech befindet, in den Dampf getaucht und der Sauerstoff im Pressling kann mit dem Reduktionsmittel reagieren. Durch den bevorzugten Tauchprozess des erfindungsgemäßen Verfahrens können höhere Temperaturen im Inneren des Presslings erreicht werden, was zu einem größeren Schwund des Presslings und damit zu einer höheren Verdichtung führt. Es wurde überraschend gefunden, das dieser Effekt insbesondere bei Einsatz der erfindungsgemäßen Ventilmetallpulver mit einem Sauerstoffgehalt oberhalb von 4100 ppm^{∗}g/m² auftritt. Der letztendliche Schwund des Presslings kann dabei durch die Temperatur sowie die Dauer der Deoxidation bestimmt werden.

In einer weiteren bevorzugten Ausführungsform des erfindungsgemäßen Verfahrens wird das Magnesium auf ein Tablett gelegt. Darüber wird ein löchriges Blech aus Tantal oder Niob gehängt, auf dem sich die Presslinge befinden. Dabei kann der Abstand zwischen dem Tablett mit dem Magnesium und dem löchrigen Niob-Blech beispielsweise zwischen 4 und 8 cm betragen. Das Tablett, auf dem sich das Magnesium befindet, wird erhitzt. Der Sauerstoff in den Presslingen reagiert, sobald er mit dem Magnesiumdampf in Kontakt kommt.

Weiterhin bevorzugt ist eine Ausführungsform, in der sich das Reduktionsmittel und der Pressling in derselben Prozesskammer befinden, allerdings räumlich getrennt voneinander vorliegen. Dabei wird vorzugsweise zuerst das Reduktionsmittel verdampft und der Pressling dann mit dem Dampf in Kontakt gebracht, beispielsweise indem man den Pressling in den Dampf hängt. Dadurch erübrigt sich ein mühsames Um- oder Weiterleiten des Dampfes von einer Prozesskammer in eine andere, was wiederum zu einer Zeitersparnis führt. Darüber hinaus wird durch das Eintauchen des Presslings in den Dampf verhindert, dass der Pressling zu stark an spezifischer Oberfläche verliert.

Auch hier wurde überraschend gefunden, dass der Einsatz des erfindungsgemäßen Ventilmetallpulvers mit einem Sauerstoffgehalt oberhalb von 4100 ppm^{∗}g/m² die Anbindung des Drahtes an den Sinterkörper positiv unterstützt.

In einer bevorzugten Ausführungsform des erfindungsgemäßen Verfahrens erfolgt die Deoxidation des Presslings unter einem inertem Trägergas, vorzugsweise Argon, wobei die Reduktion bei einem Dampfpartialdruck des reduzierenden Metalls von 5 bis 650 hPa, bevorzugt mehr als 40 hPa, insbesondere zwischen 100 und 400 hPa erfolgt. Weiter bevorzugt liegt der Inertgasdruck in einem Bereich von 50 bis 800 hPa, bevorzugt weniger als 600 hPa, insbesondere zwischen 100 und 500 hPa.

Weiterhin bevorzugt ist eine Ausführungsform des erfindungsgemäßen Verfahrens, bei dem die Verringerung des Sauerstoffgehalts des Ventilmetalls innerhalb des Sinterkörpers bei Drücken unterhalb des Atmosphärendrucks erfolgt, vorzugsweise bei einem Gasdruck von 50 bis 800 hPa, bevorzugt unterhalb von 600 hPa, insbesondere zwischen 100 und 500 hPa.

Bevorzugt ist eine Ausführungsform des erfindungsgemäßen Verfahrens bei dem das Erhitzen, das zum Sintern und zur Verringerung des Sauerstoffgehalts führt, bei Temperaturen im Bereich von 800 °C bis 1400 °C, vorzugsweise von 900 °C bis 1200 °C, insbesondere von 900 °C bis 1100 °C, erfolgt. Vorzugsweise ist der Temperaturbereich so gewählt, dass der Sauerstoffgehalt des Sinterkörpers auf das gewünschte Maß absinkt. Sauerstoff ist allgemein dafür bekannt, dass er das Sintern eines Presslings inhibiert. Durch das Absenken des Sauerstoffgehalts kommt es zu einem effektiveren Sintern der Pulverteilchen untereinander sowie der Pulverteilchen und des eingebetteten Drahtes bei niedrigeren Temperaturen als allgemein üblich.

In einer bevorzugten Ausführungsform des erfindungsgemäßen Verfahrens ist das Reduktionsmittel ausgewählt aus Lithium und Erdalkalimetallen, vorzugsweise Magnesium oder Calcium und speziell Magnesium.

Das während der Deoxidation entstehende Oxidationsprodukt des Reduktionsmittels wird, sofern es nicht schon während des Sinterns verdampft ist, mit Hilfe von verdünnter Mineralsäure aus dem Sinterkörper ausgewaschen. Um eine zusätzliche mechanische Belastung der Sinterkörper zu vermeiden, werden diese bevorzugt auf ein löchriges Niob- oder Edelstahlblech gelegt, das zusammen mit der Waschflüssigkeit in das Waschgefäß eingebracht wird. Die Lösung wird gerührt, wobei die Rührgeschwindigkeit vorzugsweise so angepasst wird, dass die Sinterkörper während des Waschvorgangs nicht in Bewegung geraten. Vorzugsweise ist das Oxidationsprodukt des Reduktionsmittels Magnesiumoxid in der Zusammensetzung MgO. Mineralsäuren im Sinne der Erfindung sind Säuren, die keinen Kohlenstoff enthalten, wie beispielsweise Salzsäure, Schwefelsäure, Salpetersäure oder Phosphorsäure.

Durch die Deoxidation und den anschließenden Waschvorgang verringert sich die Festigkeit, mit der der eingebettete Draht im Sinterkörper versintert ist (wire pull strength). Die Anbindung des Drahtes an den Sinterkörper kann dabei soweit abnehmen, dass der Draht während der Weiterverarbeitung des Sinterkörpers aus diesem herausgezogen wird oder abbricht. Allerdings wurde überraschend gefunden, dass durch den Einsatz des erfindungsgemäßen Ventilmetallpulvers mit einem Sauerstoffgehalt oberhalb von 4100 ppm^{∗}g/m² die Anbindung des Drahtes an den Sinterkörper weiter gesteigert werden kann. In anderen Fällen ist die Anbindung so gering, dass keine elektrischen Messungen mehr durchgeführt werden können und der Sinterkörper für einen Einsatz als Kondensator unbrauchbar wird. Wie dem Fachmann bekannt ist, wird dem Problem gemäß dem Stand der Technik durch ein erneutes Sintern des deoxidierten und gewaschenen Sinterkörpers entgegengewirkt. Dadurch lässt sich zwar die Drahtanbindung an den Anodenkörper erhöhen, gleichzeitig steigt aber der Sauerstoffgehalt im Sinterkörper wieder an.

Bevorzugt ist eine Ausführungsform des erfindungsgemäßen Verfahrens, bei dem der Sauerstoffgehalt des deoxidierten Sinterkörpers im Bereich zwischen 2400 und 3600 ppm^{∗}g/m² liegt, wobei sich die ppm-Angaben jeweils auf Massenteile beziehen. Dabei wurde der Sauerstoffgehalt über Carrier Gas Reactive Fusion mit dem Gerät Nitrogen/Oxygen Determinator Model TCH 600 der Firma Leco Instrumente GmbH bestimmt.

Untersuchungen haben gezeigt, dass der Wasserstoffgehalt von deoxidierten und gewaschenen Sinterkörpern gegenüber nur gesinterten Sinterkörpern deutlich erhöht ist. Durch den erhöhten Wasserstoffgehalt nimmt nicht nur die Brüchigkeit des eingebetteten Drahtes zu, auch der gesamte Sinterkörper verliert an Festigkeit. Daher wird in einer ebenfalls bevorzugten Ausführungsform des erfindungsgemäßen Verfahrens der deoxidierte und gewaschene Sinterkörper nochmals erhitzt. Dabei sind die Bedingungen vorzugsweise so zu wählen, dass der Wasserstoff verdampft. Es wurde überraschend gefunden, dass Sinterkörper, die diesem zusätzlichen Entgasungsschritt unterzogen wurden, eine verbesserte Anbindung des eingebetteten Drahtes aufwiesen.

Die Anbindung des Drahtes an den Sinterkörper, also die "Drahtzugfestigkeit" wurde wie folgt bestimmt: Der Anodendraht wurde durch eine Öffnung von 0,25 mm Durchmesser eines Haltebleches gesteckt und das freie Ende in die Halteklemme eines Kraftmessers (Chatillon, Modell: DFGS-50 mit Antrieb LTCM-6) eingespannt, das bis zur Herauslösung des Drahtes aus der Anodenstruktur, sprich dem Sinterkörper, belastet wurde.

Es wurde überrachend gefunden, dass die Drahtanbindung des Anodendrahtes durch die Formierung des Sinterkörpers verbessert werden kann. Daher ist eine Ausführungsform bevorzugt, in der nach dem Entfernen des oxidierten Reduktionsmittels in Schritt d) des erfindungsgemäßen Verfahrens die Formierung des Sinterkörpers in einem Schritt e) erfolgt. Die Formierung ist ein dem Fachmann geläufiges Verfahren.

Wie bereits ausgeführt, ist die Drahtanbindung des Anodendrahtes an den Sinterkörper ein wichtiges Kriterium, das letztlich darüber entscheidet, ob der Sinterkörper für den späteren Einsatz in Kondensatoren geeignet ist. Es wurde überraschend gefunden, dass die Drahtanbindung nach der Deoxidation sehr hoch ist, aber nach der Wäsche stark abfällt. Weiterhin hat sich gezeigt, dass die Drahtanbindung nach der Formierung der Sinterkörper wieder ein vergleichbares Maß wie nach der Deoxidation und vor der Wäsche aufweist. Dies ist in so fern kritisch, als dass vor der Formierung der Anodendraht mechanisch belastet wird, beispielsweise durch Anschweißen an den Formierkamm ("leadframe"; Aufnahme der Anoden zum Eintauchen in den Elektrolyten und Kontaktierung der Anoden). Durch die mechanische Belastung kann es zu einem Ausreißen des Drahtes kommen, wodurch der Sinterkörper für eine weitere Verarbeitung ungeeignet wird, da eine nachträgliche Befestigung des Anodendrahtes nicht möglich ist. Weiterhin erhöht sich durch den Waschvorgang nach der Deoxidation, bei dem das oxidierte Reduktionsmittel mit Hilfe mineralischer Säuren entfernt wird, die Anzahl der benötigten Produktionsschritte, was zu einem höheren wirtschaftlichen und arbeitstechnischen Aufwand führt.

Daher ist eine Ausführungsform des erfindungsgemäßen Verfahrens bevorzugt, in dem das Entfernen des oxidierten Reduktionsmittels aus dem Sinterkörper gleichzeitig mit dessen Formierung einhergeht. Auf diese Weise kann der kritische Abfall der Drahtanbindung vermieden werden, während gleichzeitig der Verfahrensablauf optimiert wird. In einer bevorzugten Ausführungsform erfolgt das Entfernen des oxidierten Reduktionsmittels in Schritt d) bei gleichzeitiger Formierung.

Weiterhin bevorzugt ist eine Ausführungsform des erfindungsgemäßen Verfahrens, bei der die Formierung in Schritt d) in Gegenwart eines flüssigen Elektrolyten erfolgt. Dabei ist der flüssige Elektrolyt vorzugsweise derart gewählt, dass sowohl ein effektives Auswaschen des oxidierten Reduktionsmittels aus dem Sinterkörper als auch eine zufriedenstellende Formierung desselben gewährleistet ist. Es wurde überraschend gefunden, dass das oxidierte Reduktionsmittel insbesondere mit Hilfe mineralischer Säuren effektiv entfernt werden kann. Zusätzlich kann sich die Gegenwart von Oxidationsmitteln, wie beispielsweise Wasserstoffperoxid, vorteilhaft auf das Waschergebnis auswirken. Insbesondere die Aufnahme von Wasserstoff während des Waschens kann auf diese Weise verringert werden. Bei Zusatz von Wasserstoffperoxid kann darüber hinaus die Formiertemperatur auf unter 80 °C gesenkt werden.

Daher ist eine Ausführungsform bevorzugt, in der der flüssige Elektrolyt neben wenigstens einer Mineralsäure Wasserstoffperoxid (H₂O₂) umfasst.

In einer bevorzugten Ausführungsform ist die Mineralsäure ausgewählt aus der Gruppe bestehend aus Schwefelsäure, Phosphorsäure, Salzsäure, Salpetersäure sowie Mischungen davon.

Besonders bevorzugt ist eine Ausführungsform des erfindungsgemäßen Verfahrens, bei der der flüssige Elektrolyt ein oder mehrere Mineralsäure in einer Menge von 0,1 bis 10 Gew.-%, vorzugsweise 1 bis 8 Gew.-%, besonders bevorzugt 3 bis 6 Gew.-%, jeweils bezogen auf das Gesamtgewicht des flüssigen Elektrolyten, umfasst.

Weiterhin ist eine Ausführungsform bevorzugt, in der der flüssige Elektrolyt Wasserstoffperoxid in einer Menge von 0,1 bis 0,9 Gew.-%, vorzugsweise 0,3 bis 0,7 Gew.-%, jeweils bezogen auf das Gesamtgewicht des flüssigen Elektrolyten, umfasst.

In einer bevorzugten Ausführungsform des erfindungsgemäßen Verfahrens wird eine Nitridierung bei Temperaturen unterhalb von 500 °C, vorzugsweise zwischen 200 °C und 400 °C, an den Sinterungsschritt angeschlossen. Dabei wird dem Sinterkörper beispielsweise während des Abkühlens Stickstoff zugeführt. Da die Oberfläche des Sinterkörpers nur wenig Sauerstoff enthält, kann der Stickstoff einen Teil der Oberfläche des Sinterkörpers belegen. Auf diese Weise wird die Sauerstoffbelegung der Oberfläche verringert. Bevorzugt ist die Konzentration an Stickstoff im Sinterkörper so gewählt, dass ein minimaler Reststrom und eine maximale Zuverlässigkeit des Kondensators gewährleistet sind.

In einer bevorzugten Ausführungsform erfolgt im Anschluss an die Sinterung des Presslings eine Passivierung des Sinterkörpers durch Oxidation der Sinterkörperoberfläche. Dazu verbleibt der Sinterkörper, nachdem er auf eine Temperatur unterhalb von 100 °C abgekühlt ist, im Reaktor. Die Passivierung der Sinterkörperoberfläche erfolgt dann bevorzugt durch das kontrollierte und allmähliche Einleiten von Sauerstoff in den Reaktor. Vorzugsweise erfolgt die Passivierung nach dem Sintern und nach einer Nitridierung des Sinterkörpers.

Bevorzugt wird anschließend das gebildete Oxid des Reduktionsmittels mit Hilfe verdünnter Mineralsäuren ausgewaschen.

Ein weiterer Gegenstand der vorliegenden Erfindung ist ein Sinterkörper, der durch das erfindungsgemäße Verfahren erhältlich ist.

In einer bevorzugten Ausführungsform weist der durch das erfindungsgemäße Verfahren erhältliche Sinterkörper eine BET-Oberfläche von 1,5 m²/g bis 10 m²/g, vorzugsweise von 2 m²/g bis 8 m²/g und insbesondere von 3 m²/g bis 6 m²/g, auf. Dabei wurde die BET-Oberfläche gemäß DIN ISO 9277 bestimmt.

In einer weiteren bevorzugten Ausführungsform weist der erfindungsgemäße Sinterkörper einen Draht auf, welcher bevorzugt aus einem Ventilmetall besteht oder ein solches umfasst, der mit dem Sinterkörper verbunden ist, insbesondere mit diesem verpresst ist. Vorzugsweise ist das Ventilmetall ausgewählt aus der Gruppe bestehend aus Tantal und Niob.

Der durch das erfindungsgemäße Verfahren erhältliche Sinterkörper weist einen Sauerstoffgehalt von 2000 ppm^{∗}g/m² bis 4000 ppm^{∗}g/m², vorzugsweise von 2500 ppm^{∗}g/m² bis 3500 ppm^{∗}g/m², insbesondere von 2700 ppm^{∗}g/m² bis 3500 ppm^{∗}g/m², auf.

Dabei beziehen sich die ppm-Angaben jeweils auf Massenteile. Der Sauerstoffgehalt wurde über Carrier Gas Reactive Fusion mit dem Gerät Nitrogen/Oxygen Determinator Model TCH 600 der Firma Leco Instrumente GmbH bestimmt.

In einer bevorzugten Ausführungsform enthält der Sinterkörper Sinterinhibitoren, vorzugsweise ausgewählt aus der Gruppe bestehend aus
i) Stickstoff in einer Menge unterhalb von 300 ppm, vorzugsweise zwischen 0,1 ppm und 300 ppm,
ii) Bor in einer Menge unterhalb von 10 ppm, vorzugsweise zwischen 0,01 ppm und 10 ppm,
iii) Schwefel in einer Menge unterhalb von 20 ppm, vorzugsweise zwischen 0,1 ppm und 10 ppm,
iv) Silizium in einer Menge unterhalb von 20 ppm, vorzugsweise zwischen 0,01 ppm und 20 ppm,
v) Arsen in einer Menge unterhalb von 10 ppm, vorzugsweise zwischen 0,01 ppm und 10 ppm und
vi) Phosphor in einer Menge unterhalb von 20 ppm, vorzugsweise zwischen 0,1 ppm und 20 ppm, wobei sich die ppm-Werte jeweils auf Massenteile beziehen.

Die erfindungsgemäßen Sinterkörper eignen sich insbesondere für elektronische Bauteile, insbesondere für solche im Mobilfunkbereich.

Ein weiterer Gegenstand der vorliegenden Erfindung ist daher die Verwendung des erfindungsgemäßen Sinterkörper für elektronische Bauteile, insbesondere Kondensatoren.

Das erfindungsgemäße Verfahren soll anhand der folgenden Beispiele verdeutlicht werden, wobei die Beispiele nicht als Einschränkung des Erfindungsgedanken zu verstehen sind.

Allgemeine Beschreibung:
Das Tantalpulver wurde mit Stearinsäure als Presshilfsmittel und einem Draht aus Tantal zu einem Pressling mit eingebettetem Draht mit einer Pressdichte von 6.0 g/cm³ verpresst. Die Stearinsäure wurde mittels alkalischer Hydrolyse (NaOH) und anschließendem Waschen des Presslings mit Wasser entfernt. Anschließend wurde mit verdünnter Säure nachgewaschen. Auf diese Weise wurde erreicht, dass der Pressling einen Kohlenstoffgehalt unterhalb von 50 ppm und einen Natriumgehalt unterhalb von 20 ppm aufwies. In einer Reaktionskammer wurde Magnesium erhitzt. Sobald die gewünschte Temperatur erreicht war, wurde der Pressling, der sich in einem Korb aus löchrigem Niob-Blech befand, in den Magnesiumdampf eingebracht. Die genaue Temperatur und die Dauer der einzelnen Versuche können Tabelle 2 entnommen werden. Der auf diese Weise deoxidierte und gesinterte Pressling wurde nach den dem Fachmann bekannten Standardverfahren passiviert. Das während der Deoxidation entstandene MgO wurde mit Hilfe von verdünnter Schwefelsäure aus dem Sinterkörper ausgewaschen. Dazu wurde der Sinterkörper auf ein löchriges Niob-Blech gelegt, das in ein Waschgefäß, das die verdünnte Schwefelsäure enthielt, eingebracht wurde. Die Mischung wurde vorsichtig gerührt, so dass die Sinterkörper nicht in Bewegung gerieten.

Die genaue Zusammensetzung der verwendeten Tantal-Pulver ist in Tabelle 1 und Tabelle 1a zusammengefasst.

**Tabelle 1 (für die Beispiele 1 bis 9 genutzte Pulver):**

| | BET m²/g | O/BET¹ ppm/(m²/g)^{∗} |
|---|---|---|
| Vergleichspulver² (Vergleichsbeispiele 1-4) | 5,46 | 2418 |
| Pulver 1 (Beispiel 1-4) | 7,52 | 2992 |
| Pulver 2 (Beispiel 5+6) | 5,92 | 4155 |
| Pulver 3 (Beispiel 7+9) | 7,95 | 3044 |

| | | |
|---|---|---|
| ¹ Sauerstoffgehalt bezogen auf die spezifische Oberfläche ² hergestellt gemäß der Lehre der WO 2006/039999 A1 ^{∗} Die angegebenen ppm-Werte beziehen sich jeweils auf Massenteile. | | |

Weiterhin wurden für die Pulver die folgenden Werte gemessen:

**Tabelle 1a^{∗}:**

| | Mg ppm | O ppm | H ppm | N ppm | C ppm | P ppm | As ppm | B ppm | Si ppm | S ppm |
|---|---|---|---|---|---|---|---|---|---|---|
| Vergleichs-pulver² (Vergleichsbeispiele 1-4) | 40 | 13200 | 288 | 1445 | 14 | 89 | - | - | - | - |
| Pulver 1 (Beispiel 1-4) | 78 | 22500 | - | <300 | 11 | 5 | - | - | - | - |
| Pulver 2 (Beispiel 5+6) | - | 24600 | - | - | - | 7 | <1 | <1 | <3 | <10 |
| Pulver 3 (Beispiel 7+9) | 55 | 24200 | - | <300 | <10 | 8 | | | | |

| | | | | | | | | | | |
|---|---|---|---|---|---|---|---|---|---|---|
| ^{∗} Die angegebenen ppm-Werte beziehen sich jeweils auf Massenteile. | | | | | | | | | | |

Die in den Beispielen 1 bis 4 verwendeten Tantalpulver wiesen einen Sauerstoffgehalt von 2992 ppm^{∗}g/m², das in den Beispielen 5 und 6 verwendete Pulver einen Sauerstoffgehalt von 4155 ppm^{∗}g/m² und das in den Beispielen 7 und 9 verwendete Pulver einen Sauerstoffgehalt von 3044 ppm^{∗}g/m² auf.

In Tabelle 2 werden die Sinterbedingungen für die Herstellung der Sinterkörper wiedergegeben. Die erfindungsgemäßen Beispiele 1 bis 7 und 9 wurden gemäß dem erfindungsgemäßen Verfahren wie zuvor beschrieben hergestellt.

Die Sinterkörper gemäß den Vergleichsbeispielen 1 - 4 wurden unter den angegebenen Bedingungen nach Standardverfahren gesintert.

**Tabelle 2**

| Beispiel | Temperatur /°C | Zeit /Minuten |
|---|---|---|
| Vergleichsbeispiel 1^{∗} | 950 | 15 |
| Vergleichsbeispiel 2^{∗} | 1050 | 15 |
| Vergleichsbeispiel 3^{∗} | 1160 | 10 |
| Vergleichsbeispiel 4^{∗} | 1120 | 15 |
| Beispiel 1 | 950 | 15 |
| Beispiel 2 | 1000 | 15 |
| Beispiel 3 | 1050 | 15 |
| Beispiel 4 | 1050 | 30 |
| Beispiel 5 | 950 | 15 |
| Beispiel 6 | 1000 | 15 |
| Beispiel 7 | 950 | 15 |
| Beispiel 9 | 950 | 15 |

| | | |
|---|---|---|
| ^{∗} Das Sintern erfolgte unter Vakuum. | | |

Die auf diese Weise erhaltenen Sinterkörper zeigten die in Tabelle 3 zusammengefassten Zusammensetzungen.

**Tabelle 3:**

| | Mg ppm | O ppm | H Ppm | N ppm | C ppm | P ppm |
|---|---|---|---|---|---|---|
| Vergleichsbeispiel 1 | - | - | - | - | - | - |
| Vergleichsbeispiel 2 | - | - | - | - | - | - |
| Vergleichsbeispiel 3 | 27 | 21100 | - | 1352 | 20 | 64 |
| Vergleichsbeispiel 4 | - | - | - | - | - | - |
| Beispiel 1 | 24 | 10600 | 307 | 204 | 34 | - |
| Beispiel 2 | 22 | 7731 | 209 | 216 | 20 | - |
| Beispiel 3 | 21 | 5711 | 132 | >300 | 44 | - |
| Beispiel 4 | 18 | 5162 | 75 | 189 | 28 | - |
| Beispiel 5 | 22 | 10500 | 301 | 201 | 36 | - |
| Beispiel 6 | 17 | 7620 | 202 | 207 | 17 | - |

Weiterhin wiesen die nach dem erfindungsgemäßen Verfahren erhaltenen Sinterkörper die in Tabelle 4 zusammengefassten Eigenschaften auf:

**Tabelle 4:**

| | BET m²/g | O/BET¹ ppm/(m²/g)^{∗} | PD² g/cm³ | SD³ g/cm³ | Schwund | WPS⁴ N |
|---|---|---|---|---|---|---|
| Vergleichsbeispiel 1 | - | - | 6,2 | 6,05 | -3% | 3 |
| Vergleichsbeispiel 2 | - | - | 6,14 | 6,08 | -1% | 3 |
| Vergleichsbeispiel 3 | 2,81 | 7509 | 6,0 | 6,49 | 8% | 11,3 |
| Vergleichsbeispiel 4 | - | - | 6,14 | 6,25 | 2% | 5,3 |
| Beispiel 1 | 3,34 | 3174 | 6,0 | 5,89 | -3% | 2,7 |
| Beispiel 2 | 2,45 | 3156 | 6,1 | 6,09 | 0% | 4,1 |
| Beispiel 3 | 1,84 | 3104 | 6,1 | 6,4 | 5% | 7,4 |
| Beispiel 4 | 1,57 | 3288 | 6,1 | 6,4 | 5% | 9,5 |
| Beispiel 5 | 3,37 | 3116 | 6,05 | 5,99 | -1% | 4,6 |
| Beispiel 6 | 2,46 | 3098 | 6,05 | 6,34 | 5% | 11 |

| | | | | | | |
|---|---|---|---|---|---|---|
| ¹Sauerstoffgehalt bezogen auf die spezifische Oberfläche ²PD: Pressdichte ³SD: Sinterdichte ⁴WPS: wire pull strength (Ausreißfestigkeit des in den Anodenkörper eingebetteten Drahtes) ^{∗}Die angegebene ppm-Werte beziehen sich jeweils auf Massenteile. | | | | | | |

Die Anbindung des Drahtes an den Sinterkörper, also die "Drahtzugfestigkeit" WPS) wurde wie folgt bestimmt: Der Anodendraht wurde durch eine Öffnung von 0,25 mm Durchmesser eines Haltebleches gesteckt und das freie Ende in die Halteklemme eines Kraftmessers (Chatillon, Modell: DFGS-50 mit Antrieb LTCM-6) eingespannt, das bis zur Herauslösung des Drahtes aus der Anodenstruktur, sprich dem Sinterkörper, belastet wurde.

Die Sinterkörper wurden in 0,1%ige Phosphorsäure eingetaucht und bei einer auf 150 mA/g begrenzten Stromstärke bis zu einer Formierspannung von 10 V (Vergleichsbeispiele 1 bis 4 und Beispiele 1 bis 6) beziehungsweise 17,5 V (Vergleichsbeispiel 3a und Beispiele 8 und 10) formiert. Für die Formierung des als Beispiel 10 deklarierten Sinterkörpers wurde ein wässriger Elektrolyt verwendet, dem 5 Gew.-% Schwefelsäure und 0,5 Gew.-% Wasserstoffperoxid zugegeben wurden, wobei sich die Gewichtsangaben jeweils auf das Gesamtgewicht des wässrigen Elektrolyten beziehen, wobei die Formierspannung bei 17,5 V lag. Nach Abfallen der Stromstärke wurde die Spannung für drei Stunden aufrecht erhalten.

Die Ergebnisse der Untersuchung bezüglich der Drahtanbindung bei den einzelnen Verfahrensschritten sind in Tabelle 5 zusammengefasst. Wie der Tabelle zu entnehmen ist, weist ein Sinterkörper, der aus einem Pulver gemäß Tabelle 1, Beispiel 3 hergestellt wurde, nach dem Auswaschen des oxidierten Reduktionsmittels eine sehr niedrige Drahtanbindung auf (Beispiel 7), womit der Sinterkörper einer hohen Anfälligkeit bezüglich mechanischer Belastung ausgesetzt ist. Die Drahtanbindung steigt nach der Formierung bei 17,5 V wieder an (Beispiel 8). Demgegenüber weist ein Sinterkörper, direkt nach der Deoxidation eine relative hohe Drahtanbindung auf (Beispiel 9). Wie Beispiel 10 zu entnehmen ist, kann die hohe Drahtanbindung erhalten werden, wenn der Sinterkörper direkt nach der Deoxidation einem kombinierten Wasch- und Formierschritt unterzogen wird, wobei dem wässrigen Elektrolyt 5 Gew.-% Schwefelsäure und 0,5 Gew.-% Wasserstoffperoxid hinzugefügt wird. Auf diese Weise wird eine Absenkung der Drahtanbindung während des Prozesses vermieden. Somit kann ein Prozessschritt eingespart werden, was den Herstellungsprozess der Sinterkörper zeit- und kosteneffektiver macht. Darüber hinaus weist der Sinterkörper über die gesamte Zeit hinweg eine hohe Drahtanbindung auf, wodurch etwaige Schäden durch mechanische Belastung, beispielsweise das Herausziehen des Drahtes, vermieden werden.

**Tabelle 5**

| | WPS |
|---|---|
| Beispiel 7 | 2,9 |
| Beispiel 8 | 16,5 |
| Beispiel 9 | 13,8 |
| Beispiel 10 | 18,6 |

Wie der Tabelle 7 zu entnehmen ist, hat der kombinierte Wasch- und Formierungsschritt keine negativen Auswirkungen auf die elektrischen Eigenschaften der Sinterkörper (Tabelle 7, Beispiel 10). Die erhobenen Daten liegen vielmehr in einem vergleichbaren Bereich mit denen von Sinterkörpern, bei denen das Entfernen des oxidierten Reduktionsmittels und die Formierung in zwei voneinander getrennten Prozessschritten vorgenommen wurden (Tabelle 7, Beispiel 8). Der Sinterkörper, dessen elektrischen Eigenschaften als Vergleichsbeispiel in Tabelle 7 als Vergleichsbeispiel 3a festgehalten sind, wurde analog dem Vergleichsbespiel 3 hergestellt, wobei eine Formierspannung von 17,5 V verwendet wurde.

Für die Kapazitätsmessungen wurde eine Kathode aus 18%iger Schwefelsäure eingesetzt. Es wurde mit Wechselspannungen bei 20 Hz und 120 Hz bei gleichzeitigem Anlegen einer BIAS-Spannung von 1,5 V gemessen.

Für die so erhaltenen Sinterkörper ergaben sich die in Tabelle 6 zusammengefassten Eigenschaften.

**Tabelle 6:**

| | 1.5 V Bias | | | | | |
|---|---|---|---|---|---|---|
| | 20 Hz | | 120 Hz | | | |
| | µFV/cm³ | µFV/g | µFV/cm³ | µFV/g | µA/g | gemessen |
| Vergleichsbeispiel 1 | - | - | - | - | - | 0/10 |
| Vergleichsbeispiel 2 | 1352600 | 226946 | 1302400 | 218523 | 43,9 | 2/10 |
| Vergleichsbeispiel 3 | 1132572 | 173351 | 1093891 | 167430 | 62,6 | 10/10 |
| Vergleichsbeispiel 4 | 1124152 | 179861 | 1082188 | 173147 | 62,6 | 9/10 |
| Beispiel 1 | 842960 | 145944 | 824460 | 143264 | 27,6 | 9/10 |
| Beispiel 2 | 623600 | 97709 | 614800 | 96329 | 23 | 10/10 |
| Beispiel 3 | 578175 | 90126 | 570238 | 88882 | 24 | 10/10 |
| Beispiel 5 | 850741 | 143556 | 827778 | 139688 | 33,5 | 10/10 |

**Tabelle 7**

| | 1.5 V Bias | | | | | |
|---|---|---|---|---|---|---|
| | 20 Hz | | 120 Hz | | | |
| | µPV/cm³ | µFV/g | µFV/cm³ | µFV/g | µA/g | gemessen |
| Vergleichsbeispiel 3a | 1132572 | 173351 | 1093891 | 167430 | 62,6 | 10/10 |
| Beispiel 8 | 834609 | 148186 | 779622 | 138423 | 40,9 | 10/10 |
| Beispiel 10 | 808041 | 142344 | 792690 | 139636 | 38,4 | 10/10 |

Wie den aufgeführten Daten zu entnehmen ist, ist der Sauerstoffgehalt in den hergestellten Sinterkörpern deutlich niedriger als in nach den derzeitigen Standardverfahren erhältlichen Sinterkörpern. Sinterkörper, die nach dem erfindungsgemäßen Verfahren hergestellt wurden, zeigen außerdem nicht den üblichen Nachteil einer verminderten Ausreißfestigkeit des in den Anodenkörper eingebetteten Drahtes. Durch die erfindungsgemäße Kombination von Waschen des Sinterkörpers nach der Deoxidation und der Formierung des Sinterkörpers lässt sich zudem ein temporärer Abfall der Drahtanbindung während des Prozesses vermeiden. Außerdem weisen die Sinterkörper einen niedrigeren Reststrom auf.

Wie den Werten der Tabelle 4 zu entnehmen ist, weisen die Sinterkörper, zu deren Herstellung ein Tantalpulver mit einem höheren Sauerstoffgehalt (4155 ppm^{∗}g/m²) verwendet wurde, eine verbesserte Drahtanbindung auf, als Sinterkörper, bei deren Herstellung ein Tantalpulver mit einem im Stand der Technik üblichen Sauerstoffgehalt (2992 ppm^{∗}g/m²) eingesetzt wurde. Wie dem Fachmann bekannt ist, wird die Drahtanbindung stark von den Sinterbedingungen beeinflusst. Daher können nur Sinterkörper miteinander verglichen werden, die unter den gleichen Bedingungen versintert wurden. Somit zeigen der Vergleich von Beispiel 1 mit Beispiel 5 sowie der Vergleich von Beispiel 2 mit Beispiel 6 die erfindungsgemäß erzielte verbesserte Drahtanbindung.

Weiterhin wurde gefunden, dass die Vergleichsbeispiele einen wesentlich höheren Reststrom aufweisen als die vergleichbaren erfindungsgemäßen Sinterkörper. Es zeigt sich zudem, dass der bei niedrigen Temperaturen hergestellte Sinterkörper gemäß Vergleichsbeispiel 1 keine genügende Anbindung aufwies, um Messungen der elektrischen Eigenschaften durchzuführen. Auch für Vergleichssinterkörper 2 zeigten sich lediglich 2 von 10 Sinterkörpern als geeignet für die Messung.

Figur 1 zeigt eine Aufnahme mittels Sekundärelektronenmikroskopie des in dem oben aufgeführten Beispiel 5 dargestellten Sinterkörpers.

Figur 2 zeigt eine Aufnahme mittels Sekundärelektronenmikroskopie des als Vergleichsbeispiels 3 in Tabelle 4 verwendeten Sinterkörper.

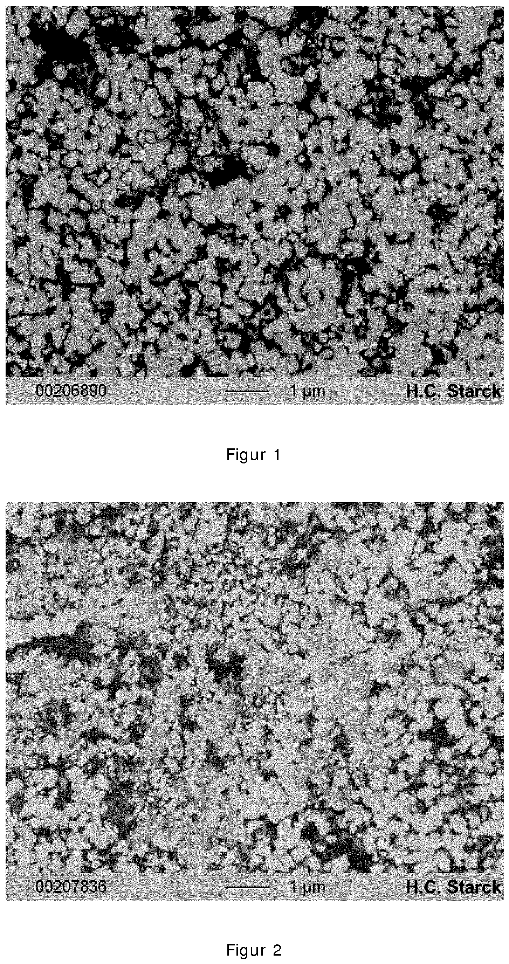

Die in den Figuren 1 und 2 abgebildeten mikroskopischen Aufnahmen zeigen über den Elementenkontrast in "schwarz" die Poren des Sinterkörpers, in "grau" die Tantaloxidabscheidungen und in "weiß" das Tantal.

Wie in Figur 2 zu erkennen, ist der Anteil an "grauen" Bereichen hoch, was auf einen deutlichen Anteil an Tantaloxid hinweist. Im Gegensatz dazu fehlen diese "Graubereiche" in der Aufnahme gemäß Figur 1 vollständig, wodurch sich zeigt, dass die erfindungsgemäßen Sinterkörper einen wesentlich geringeren Anteil an Tantaloxid aufweisen.

## Patentansprüche

1. Verfahren zur Herstellung eines Sinterkörpers umfassend die folgenden Schritte:
a) Pressen eines Ventilmetallpulvers ausgewählt aus Tantal und/oder Niob umfassend:
i) Sauerstoff in einer Menge von 4100 ppm·g/m² und 8000 ppm·g/m²,
ii) Stickstoff in einer Menge unterhalb von 300 ppm, vorzugsweise zwischen 0,1 ppm und 300 ppm,
iii) Bor in einer Menge unterhalb von 10 ppm, vorzugsweise zwischen 0,01 ppm und 10 ppm,
iv) Schwefel in einer Menge unterhalb von 20 ppm, vorzugsweise zwischen 0,1 ppm und 10 ppm,
v) Silizium in einer Menge unterhalb von 20 ppm, vorzugsweise zwischen 0,01 ppm und 20 ppm,
vi) Arsen in einer Menge unterhalb von 10 ppm, vorzugsweise zwischen 0,01 ppm und 10 ppm und
vii) Phosphor in einer Menge unterhalb von 20 ppm, vorzugsweise zwischen 0,1 ppm und 20 ppm, wobei sich die ppm-Werte jeweils auf Massenteile beziehen,
wobei das Pressen des Pulvers um einen Draht erfolgt,
b) Bereitstellen des in Schritt a) erhaltenen Presslings mit einem Reduktionsmittel derart, dass der Pressling nicht im direkten Kontakt mit festem oder flüssigem Reduktionsmittel steht oder gelangt,
c) Erhitzen derart, dass das Pulver zu einem Sinterkörper versintert und gleichzeitig der Sauerstoffgehalt des Ventilmetalls innerhalb des Sinterkörpers verringert wird; und
d) Entfernen des oxidierten Reduktionsmittels mit Hilfe von Mineralsäuren, wobei der Sinterkörper in Schritt c) einen Sauerstoffgehalt von 2400 bis 3600 ppm·g/m² aufweist.

2. Verfahren gemäß Anspruch 1, **dadurch gekennzeichnet, dass** das Erhitzen in Schritt c) bei Temperaturen im Bereich von 800 °C bis 1400 °C, vorzugsweise 900 °C bis 1200 °C, insbesondere zwischen 900 °C und 1100 °C erfolgt.

3. Verfahren gemäß Anspruch 1 oder 2, **dadurch gekennzeichnet, dass** das Reduktionsmittel ausgewählt ist aus der Gruppe bestehend aus Lithium und Erdalkalimetallen, vorzugsweise Magnesium oder Calcium und speziell Magnesium.

4. Verfahren gemäß einem oder mehreren der Ansprüche 1 bis 3, **dadurch gekennzeichnet, dass** das Ventilmetallpulver eine BET-Oberfläche von 1,5 m²/g bis 20 m²/g, vorzugsweise 2,0 m²/g bis 15 m²/g, insbesondere 3,0 m²/g bis 10 m²/g, speziell 4 bis 8 m²/g, aufweist, bestimmt nach dem Verfahren Brunauer, Emmet und Teller, DIN ISO 9277.

5. Verfahren gemäß einem oder mehreren der vorangehenden Ansprüche, **dadurch gekennzeichnet, dass** das Verpressen des Pulvers um einen Draht aus Ventilmetallen erfolgt.

6. Verfahren gemäß einem oder mehreren der vorangehenden Ansprüche, **dadurch gekennzeichnet, dass** das Reduktionsmittel in fester oder flüssiger Form räumlich getrennt von den Ventilmetallen vorliegt.

7. Verfahren gemäß einem oder mehreren der vorangehenden Ansprüche, **dadurch gekennzeichnet, dass** das Verpressen des Pulvers bis zu einer Gründichte von 4,5 g/cm³ bis 9 g/cm³, vorzugsweise 5 g/cm³ bis 8 g/cm³, weiter bevorzugt 5,5 g/cm³ bis 7,5 g/cm³, insbesondere 5,5 g/cm³ bis 6,5 g/cm³ erfolgt.

8. Verfahren gemäß einem oder mehreren der vorangehenden Ansprüche, **dadurch gekennzeichnet, dass** sich an den Sinterungsschritt c) eine Nitridierung bei Temperaturen unterhalb von 500 °C, vorzugsweise zwischen 200 °C und 400 °C, anschließt.

9. Verfahren gemäß einem oder mehreren der vorangehenden Ansprüche, **dadurch gekennzeichnet, dass** das Ventilmetallpulver einen mittleren Partikeldurchmesser D50 von 10 bis 200 µm, vorzugsweise von 15 bis 175 µm, aufweist, bestimmt gemäß ASTM B822.

10. Verfahren gemäß einem oder mehreren der vorangehenden Ansprüche, **dadurch gekennzeichnet, dass** die Verringerung des Sauerstoffgehalts des Ventilmetalls innerhalb des Sinterkörpers bei Drücken unterhalb des Atmosphärendrucks erfolgt, vorzugsweise bei einem Gasdruck von 50 bis 800 hPa, bevorzugt unterhalb von 600 hPa, insbesondere zwischen 100 und 500 hPa.

11. Verfahren gemäß einem oder mehreren der vorangehenden Ansprüche, **dadurch gekennzeichnet, dass** sich Schritt d) ein Formierungsschritt e) anschließt.

12. Verfahren gemäß einem oder mehreren der vorangehenden Ansprüche, **dadurch gekennzeichnet, dass** das Entfernen des oxidierten Reduktionsmittels in Schritt d) bei gleichzeitiger Formierung des Sinterkörpers erfolgt.

13. Verfahren gemäß einem oder mehreren der vorangehenden Ansprüche, **dadurch gekennzeichnet, dass** die Formierung in Schritt d) in Gegenwart eines flüssigen Elektrolyten erfolgt.

14. Verfahren gemäß Anspruch 13, **dadurch gekennzeichnet, dass** der flüssige Elektrolyt neben wenigstens einer Mineralsäure Wasserstoffperoxid (H₂O₂) umfasst.

15. Sinterkörper erhältlich durch ein Verfahren gemäß einem oder mehreren der vorangehenden Ansprüche 1 bis 14, **dadurch gekennzeichnet, dass** der Sinterkörper einen Sauerstoffgehalt von 2000 bis 4000 ppm^{∗}g/m² aufweist.

16. Sinterkörper gemäß Anspruch 15, **dadurch gekennzeichnet, dass** er eine BET-Oberfläche von 1,5 bis 10 m²/g, vorzugsweise 2 bis 8 m²/g und insbesondere 3 bis 6 m²/g aufweist, bestimmt gemäß DIN ISO 9277.

17. Sinterkörper gemäß einem oder mehrerer der Ansprüche 15 und 16, **dadurch gekennzeichnet, dass** der Sinterkörper einen Sauerstoffgehalt von 2500 bis 3500 ppm·g/m², insbesondere von 2700 bis 3500 ppm·g/m², aufweist.

18. Sinterkörper gemäß einem oder mehrerer der Ansprüche 15 bis 17, **dadurch gekennzeichnet, dass** der Sinterkörper Sinterinhibitoren enthält, vorzugsweise ausgewählt aus der Gruppe bestehend aus
i) Stickstoff in einer Menge unterhalb von 300 ppm, vorzugsweise zwischen 0,1 ppm und 300 ppm,
ii) Bor in einer Menge unterhalb von 10 ppm, vorzugsweise zwischen 0,01 ppm und 10 ppm,
iii) Schwefel in einer Menge unterhalb von 20 ppm, vorzugsweise zwischen 0,1 ppm und 10 ppm,
iv) Silizium in einer Menge unterhalb von 20 ppm, vorzugsweise zwischen 0,01 ppm und 20 ppm,
v) Arsen in einer Menge unterhalb von 10 ppm, vorzugsweise zwischen 0,01 ppm und 10 ppm und
vi) Phosphor in einer Menge unterhalb von 20 ppm, vorzugsweise zwischen 0,1 ppm und 20 ppm, wobei sich die ppm-Werte jeweils auf Massenteile beziehen.

19. Verwendung eines Sinterkörpers gemäß einem oder mehrerer der Ansprüche 15 bis 18 für elektronische Bauteile, insbesondere Kondensatoren.

## Claims

1. Process for producing a sintered body, comprising the following steps:
a) pressing a valve metal powder selected from tantalum and/or niobium, comprising:
i) oxygen in an amount of 4100 ppm·g/m² and 8000 ppm·g/m²,
ii) nitrogen in an amount below 300 ppm, preferably between 0.1 ppm and 300 ppm,
iii) boron in an amount below 10 ppm, preferably between 0.01 ppm and 10 ppm,
iv) sulfur in an amount below 20 ppm, preferably between 0.1 ppm and 10 ppm,
v) silicon in an amount below 20 ppm, preferably between 0.01 ppm and 20 ppm,
vi) arsenic in an amount below 10 ppm, preferably between 0.01 ppm and 10 ppm and
vii) phosphorus in an amount below 20 ppm, preferably between 0.1 ppm and 20 ppm, where the ppm values are each based on parts by mass,
wherein the powder is pressed around a wire,
b) providing the pellet obtained in step a) together with a reducing agent such that the pellet is not in direct contact and does not come into direct contact with solid or liquid reducing agent,
c) heating in such a way that the powder is sintered to form a sintered body and the oxygen content of the valve metal within the sintered body is simultaneously reduced; and
d) removing the oxidized reducing agent with the aid of mineral acids, where the sintered body in step c) has an oxygen content of 2400 to 3600 ppm·g/m².

2. Process according to Claim 1, **characterized in that** the heating in step c) is effected at temperatures in the range from 800°C to 1400°C, preferably 900°C to 1200°C, especially between 900°C and 1100°C.

3. Process according to Claim 1 or 2, **characterized in that** the reducing agent is selected from the group consisting of lithium and alkaline earth metals, preferably magnesium or calcium and especially magnesium.

4. Process according to one or more of Claims 1 to 3, **characterized in that** the valve metal powder has a BET surface area of 1.5 m²/g to 20 m²/g, preferably 2.0 m²/g to 15 m²/g, particularly 3.0 m²/g to 10 m²/g, especially 4 to 8 m²/g, determined by the method of Brunauer, Emmett and Teller, DIN ISO 9277.

5. Process according to one or more of the preceding claims, **characterized in that** the powder is pressed around a wire made from valve metals.

6. Process according to one or more of the preceding claims, **characterized in that** the reducing agent in solid or liquid form is spatially separate from the valve metals.

7. Process according to one or more of the preceding claims, **characterized in that** the powder is pressed up to a green density of 4.5 g/cm³ to 9 g/cm³, preferably 5 g/cm³ to 8 g/cm³, further preferably 5.5 g/cm³ to 7,5 g/cm³, especially 5.5 g/cm³ to 6.5 g/cm³.

8. Process according to one or more of the preceding claims, **characterized in that** the sintering step c) is followed by a nitriding step at temperatures below 500°C, preferably between 200°C and 400°C.

9. Process according to one or more of the preceding claims, **characterized in that** the valve metal powder has a median particle diameter D50 of 10 to 200 µm, preferably of 15 to 175 µm, determined to ASTM B822.

10. Process according to one or more of the preceding claims, **characterized in that** the reduction in the oxygen content of the valve metal within the sintered body is effected at pressures below atmospheric pressure, preferably at a gas pressure of 50 to 800 hPa, preferably below 600 hPa, especially between 100 and 500 hPa.

11. Process according to one or more of the preceding claims, **characterized in that** step d) is followed by a forming step e).

12. Process according to one or more of the preceding claims, **characterized in that** the removal of the oxidized reducing agent in step d) is accompanied by simultaneous forming of the sintered body.

13. Process according to one or more of the preceding claims, **characterized in that** the forming in step d) is effected in the presence of a liquid electrolyte.

14. Process according to Claim 13, **characterized in that** the liquid electrolyte comprises hydrogen peroxide (H₂O₂) as well as at least one mineral acid.

15. Sintered body obtainable by a process according to one or more of the preceding Claims 1 to 14, **characterized in that** the sintered body has an oxygen content of 2000 to 4000 ppm*g/m².

16. Sintered body according to Claim 15, **characterized in that** it has a BET surface area of 1.5 to 10 m²/g, preferably 2 to 8 m²/g and especially 3 to 6 m²/g, determined to DIN ISO 9277.

17. Sintered body according to one or more of Claims 15 and 16, **characterized in that** the sintered body has an oxygen content of 2500 to 3500 ppm·g/m², especially of 2700 to 3500 ppm·g/m².

18. Sintered body according to one or more of Claims 15 to 17, **characterized in that** the sintered body comprises sintering inhibitors, preferably selected from the group consisting of
i) nitrogen in an amount below 300 ppm, preferably between 0.1 ppm and 300 ppm,
ii) boron in an amount below 10 ppm, preferably between 0.01 ppm and 10 ppm,
iii) sulfur in an amount below 20 ppm, preferably between 0.1 ppm and 10 ppm,
iv) silicon in an amount below 20 ppm, preferably between 0.01 ppm and 20 ppm,
v) arsenic in an amount below 10 ppm, preferably between 0.01 ppm and 10 ppm and
vi) phosphorus in an amount below 20 ppm, preferably between 0.1 ppm and 20 ppm, where the ppm values are each based on parts by mass.

19. Use of a sintered body according to one or more of Claims 15 to 18 for electronic components, especially capacitors.

## Revendications

1. Procédé de fabrication d'un corps fritté comprenant les étapes suivantes :
a) la compression d'une poudre de métal valve choisie parmi le tantale et/ou le niobium, comprenant :
i) de l'oxygène en une quantité de 4 100 ppm·g/m² et 8 000 ppm·g/m²,
ii) de l'azote en une quantité inférieure à 300 ppm, de préférence entre 0,1 ppm et 300 ppm,
iii) du bore en une quantité inférieure à 10 ppm, de préférence entre 0,01 ppm et 10 ppm,
iv) du soufre en une quantité inférieure à 20 ppm, de préférence entre 0,1 ppm et 10 ppm,
v) du silicium en une quantité inférieure à 20 ppm, de préférence entre 0,01 ppm et 20 ppm,
vi) de l'arsenic en une quantité inférieure à 10 ppm, de préférence entre 0,01 ppm et 10 ppm, et
vii) du phosphore en une quantité inférieure à 20 ppm, de préférence entre 0,1 ppm et 20 ppm, les valeurs en ppm se rapportant chacune à des parties en masse,
la compression de la poudre étant effectuée autour d'un fil,
b) la fourniture du comprimé obtenu à l'étape a) avec un agent réducteur de telle sorte que le comprimé ne soit pas ou ne vienne pas en contact direct avec un agent réducteur solide ou liquide,
c) le chauffage de telle sorte que la poudre se fritte en un corps fritté et que la teneur en oxygène du métal valve soit simultanément réduite à l'intérieur du corps fritté ; et
d) l'élimination de l'agent réducteur oxydé à l'aide d'acides minéraux, le corps fritté présentant à l'étape c) une teneur en oxygène de 2 400 à 3 600 ppm·g/m².

2. Procédé selon la revendication 1, **caractérisé en ce que** le chauffage à l'étape c) est effectué à des températures dans la plage allant de 800 °C à 1 400 °C, de préférence de 900 °C à 1 200 °C, notamment entre 900 °C et 1 100 °C.

3. Procédé selon la revendication 1 ou 2, **caractérisé en ce que** l'agent réducteur est choisi dans le groupe constitué par le lithium et les métaux alcalino-terreux, de préférence le magnésium ou le calcium, et spécialement le magnésium.

4. Procédé selon une ou plusieurs des revendications 1 à 3, **caractérisé en ce que** la poudre de métal valve présente une surface BET de 1,5 m²/g à 20 m²/g, de préférence de 2,0 m²/g à 15 m²/g, notamment de 3,0 m²/g à 10 m²/g, spécialement de 4 à 8 m²/g, déterminée par le procédé Brunauer, Emmet et Teller, DIN ISO 9277.

5. Procédé selon une ou plusieurs des revendications précédentes, **caractérisé en ce que** la compression de la poudre est effectuée autour d'un fil en métaux valves.

6. Procédé selon une ou plusieurs des revendications précédentes, **caractérisé en ce que** l'agent réducteur se présente sous forme solide ou liquide, séparé dans l'espace des métaux valves.

7. Procédé selon une ou plusieurs des revendications précédentes, **caractérisé en ce que** la compression de la poudre est effectuée jusqu'à une densité de corps cru de 4,5 g/cm³ à 9 g/cm³, de préférence de 5 g/cm³ à 8 g/cm³, de préférence encore de 5,5 g/cm³ à 7,5 g/cm³, notamment de 5,5 g/cm³ à 6,5 g/cm³.

8. Procédé selon une ou plusieurs des revendications précédentes, **caractérisé en ce que** l'étape de frittage c) est suivie d'une nitruration à des températures inférieures à 500 °C, de préférence entre 200 °C et 400 °C.

9. Procédé selon une ou plusieurs des revendications précédentes, **caractérisé en ce que** la poudre de métal valve présente un diamètre de particule moyen D50 de 10 à 200 µm, de préférence de 15 à 175 µm, déterminé selon ASTM B822.

10. Procédé selon une ou plusieurs des revendications précédentes, **caractérisé en ce que** la réduction de la teneur en oxygène du métal valve à l'intérieur du corps fritté est effectuée à des pressions inférieures à la pression atmosphérique, de préférence à une pression de gaz de 50 à 800 hPa, de préférence inférieure à 600 hPa, notamment entre 100 et 500 hPa.

11. Procédé selon une ou plusieurs des revendications précédentes, **caractérisé en ce que** l'étape d) est suivie d'une étape de mise en forme e).

12. Procédé selon une ou plusieurs des revendications précédentes, **caractérisé en ce que** l'élimination de l'agent réducteur oxydé à l'étape d) est effectuée avec une mise en forme simultanée du corps fritté.

13. Procédé selon une ou plusieurs des revendications précédentes, **caractérisé en ce que** la mise en forme à l'étape d) est effectuée en présence d'un électrolyte liquide.

14. Procédé selon la revendication 13, **caractérisé en ce que** l'électrolyte liquide comprend, outre au moins un acide minéral, du peroxyde d'hydrogène (H₂O₂) .

15. Corps fritté pouvant être obtenu par un procédé selon une ou plusieurs des revendications 1 à 14 précédentes, **caractérisé en ce que** le corps fritté présente une teneur en oxygène de 2 000 à 4 000 ppm*g/m².

16. Corps fritté selon la revendication 15, **caractérisé en ce qu'**il présente une surface BET de 1,5 à 10 m²/g, de préférence de 2 à 8 m²/g et notamment de 3 à 6 m²/g, déterminée selon DIN ISO 9277.

17. Corps fritté selon une ou plusieurs des revendications 15 et 16, **caractérisé en ce que** le corps fritté présente une teneur en oxygène de 2 500 à 3 500 ppm·g/m²,notamment de 2 700 à 3 500 ppm·g/m².

18. Corps fritté selon une ou plusieurs des revendications 15 à 17, **caractérisé en ce que** le corps fritté contient des inhibiteurs de frittage, de préférence choisis dans le groupe constitué par
i) de l'azote en une quantité inférieure à 300 ppm, de préférence entre 0,1 ppm et 300 ppm,
ii) du bore en une quantité inférieure à 10 ppm, de préférence entre 0,01 ppm et 10 ppm,
iii) du soufre en une quantité inférieure à 20 ppm, de préférence entre 0,1 ppm et 10 ppm,
iv) du silicium en une quantité inférieure à 20 ppm, de préférence entre 0,01 ppm et 20 ppm,
v) de l'arsenic en une quantité inférieure à 10 ppm, de préférence entre 0,01 ppm et 10 ppm, et
vi) du phosphore en une quantité inférieure à 20 ppm, de préférence entre 0,1 ppm et 20 ppm, les valeurs en ppm se rapportant chacune à des parties en masse.

19. Utilisation d'un corps fritté selon une ou plusieurs des revendications 15 à 18 pour des composants électroniques, notamment des condensateurs.
